# FASCICULE DE BREVET EUROPEEN

(11) **EP 3 458 220 B1**
(45) Date de publication et mention de la délivrance du brevet: **29.07.2020**
(21) Numéro de dépôt: 17722082.9
(22) Date de dépôt: 31.03.2017
(51) Int. Cl.: B23K 1/00, F01D 11/08, B23K 101/02

(54) **PROCÉDÉ DE FABRICATION D'UNE STRUCTURE ALVÉOLAIRE**
VERFAHREN ZUR HERSTELLUNG EINER WABENSTRUKTUR
METHOD FOR PRODUCING A HONEYCOMB STRUCTURE

(30) Priorité: 18.05.2016 FR 1654430
(43) Date de publication de la demande: 27.03.2019
(73) Titulaire: Safran Aircraft Engines, 75015 Paris (FR)
(72) Inventeur: ARNOULD, Julien, 77550 MOISSY-CRAMAYEL (FR); CLEMENT, Jean-François, Didier, 77550 MOISSY-CRAMAYEL (FR); GIARDINI, Bruno, 77550 MOISSY-CRAMAYEL (FR)
(74) Mandataire: Ernest Gutmann - Yves Plasseraud S.A.S.
(86) Numéro de dépôt international: PCT/FR2017/050763
(87) Numéro de publication internationale: WO 2017/198916

(56) Documents cités:
- JP-A- 2013 166 174
- US-A1- 2007 243 069

## Description

La présente invention concerne un procédé de fabrication d'une structure alvéolaire destinée, en particulier, à réaliser l'étanchéité en sommet des aubes d'une roue mobile.

Classiquement une turbine, comprend un ensemble rotatif comportant une pluralité de roues mobiles reliés les unes aux autres et disposées axialement en alternance avec des rangées annulaires d'aubes de stator portées extérieurement par un carter de la turbine.

Pour limiter les circulations d'air entre les extrémités radialement externes de la roue mobile et le carter de la turbomachine, il est connu de disposer autour de la roue mobile, circonférentiellement bout à bout, une pluralité de blocs ou panneaux de matériau abradable qui sont destinés à coopérer à étanchéité avec des léchettes portées par les plates-formes des sommets d'aubes. Les blocs de matériau abradable sont fixés au carter externe par des organes d'accrochage en C engagés sur des rails circonférentiels de la face interne du carter externe.

Un bloc de matériau abradable est formé d'une pluralité de feuilles métalliques de forme semi-hexagonales assemblées les unes aux autres de manière à former une structure à alvéoles hexagonales. De manière plus générale, chaque feuille comprend, dans une première direction, des ondulations formées d'une succession de zones dites de sommet disposées en alternance avec des zones de jonction desdites zones de sommets.

Selon la technique connue, les feuilles sont assemblées les unes aux autres de manière à ce que les zones de sommets viennent en contact les unes avec les autres et sont maintenues dans cet état. Une plaque support est ensuite montée en contact avec une première des extrémités des feuilles, dans une seconde direction perpendiculaire à la première direction, et un élément de brasure tel qu'une pâte et/ou de la poudre est mis en contact avec les premières extrémités des feuilles et la plaque support. L'ensemble
est ensuite chauffé dans un four pour réaliser une solidarisation des feuilles entre elles et des feuilles avec la plaque support.

Si ce procédé de fabrication du bloc ou panneau abradable est satisfaisant du point de sa tenue mécanique, il s'avère toutefois que de la brasure peut se propager par capillarité des premières extrémités des feuilles jusqu'aux secondes extrémités opposées auxdites premières extrémités. La présence de brasure au niveau des secondes extrémités des feuilles du panneau abradable conduit à augmenter la dureté moyenne desdites secondes extrémités qui peuvent endommager les extrémités des aubes et induire une usure prématurée de celles-ci. En outre, la dureté des secondes extrémités de l'abradable peut être encore augmentée en cas de formation d'un eutectique formé du matériau constitutif des feuilles de l'abradable et de l'élément de brasure.

Le document JP2013166174A décrit la fabrication d'un joint d'étanchéité comprenant une structure en nid d'abeille. Cette structure comprend des feuilles ondulées assemblées les unes aux autres par des parties de sommet.

L'invention a notamment pour but d'apporter une solution simple, efficace et économique aux problèmes de l'art antérieur décrit précédemment.

A cet effet, le présent document propose un procédé de fabrication d'une structure alvéolaire, en particulier du type structure abradable pour turbomachine, comprenant les étapes consistant à :
a) fournir une pluralité de feuilles métalliques présentant chacune, dans une première direction, des ondulations chacune formée d'une succession de zones dites de sommet disposées en alternance avec des zones de jonction desdites zones de sommets ;
b) juxtaposer les feuilles de manière à ce que lesdites premières directions desdites feuilles soient parallèles deux à deux, les zones de sommet d'une feuille étant mise en contact avec les zones de sommets de la ou des feuilles adjacentes pour former des alvéoles ;
c) mettre une première des extrémités de chaque feuille, selon une seconde direction perpendiculaire à la première direction, en contact avec une plaque support ;
d) agencer un élément de brasure entre la plaque support et lesdites premières extrémités des feuilles et chauffer l'ensemble dans un four ;
le procédé comprenant une étape préalable à l'étape d) consistant à ajouter un moyen de blocage de la diffusion de brasure depuis lesdites premières extrémités des feuilles jusqu'aux secondes extrémités libres des feuilles.

L'ajout d'un moyen de blocage de la brasure au niveau des zones de sommet permet d'éviter la propagation de la brasure jusqu'aux secondes extrémités libres des feuilles métalliques destinées à venir en contact avec les extrémités des aubes. Il en résulte une meilleure maitrise de la dureté permettant de garantir une plus grande durée de vie pour les aubes et ainsi de réduire le temps de maintenance associé.

Selon une autre caractéristique, le moyen de blocage de la diffusion de brasure est formé sur lesdites zones de sommet des feuilles et préalablement à l'étape b).

Dans une première réalisation possible desdits moyens, des ajours sont réalisés dans au moins certaines des zones de sommet des feuilles métalliques.

Dans une seconde réalisation, lesdits moyens comprennent un produit anti-mouillant appliqué sur au moins certaines des faces en contact des zones de sommet des feuilles métalliques.

Il serait encore possible de combiner des ajours avec un produit anti-mouillant.

De préférence, les ondulations de chaque feuille forment un motif semi-hexagonal.

Les ajours peuvent par exemple avoir une dimension de l'ordre de 0,5 mm mesurée selon ladite seconde direction.

Les ajours peuvent avoir une forme sensiblement rectiligne selon la première direction.

Chaque feuille peut présenter une courbe directrice ondulée s'étendant selon ladite direction donnée et une génératrice s'étendant selon la seconde direction. Avec ce type de configuration, chaque feuille présente un plan de symétrie qui comprend la première direction et la seconde direction.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- la figure 1 est une vue schématique en coupe axiale montrant la coopération entre un panneau de matière abradable et une extrémité d'une aube mobile ;
- la figure 2 est une vue schématique en perspective d'un panneau abradable d'un type connue ;
- la figure 3 est une vue schématique en perspective en coupe selon un plan perpendiculaire à l'épaisseur du panneau abradable de la figure 3 ;
- la figure 4 est une vue schématique montrant plus particulièrement la coopération entre une léchette de l'extrémité d'une aube mobile et le panneau abradable ;
- la figure 5 est une vue schématique en perspective d'une feuille d'un panneau abradable selon une première réalisation ;
- la figure 6 est une vue schématique en perspective d'une feuille d'un panneau abradable selon une seconde réalisation.

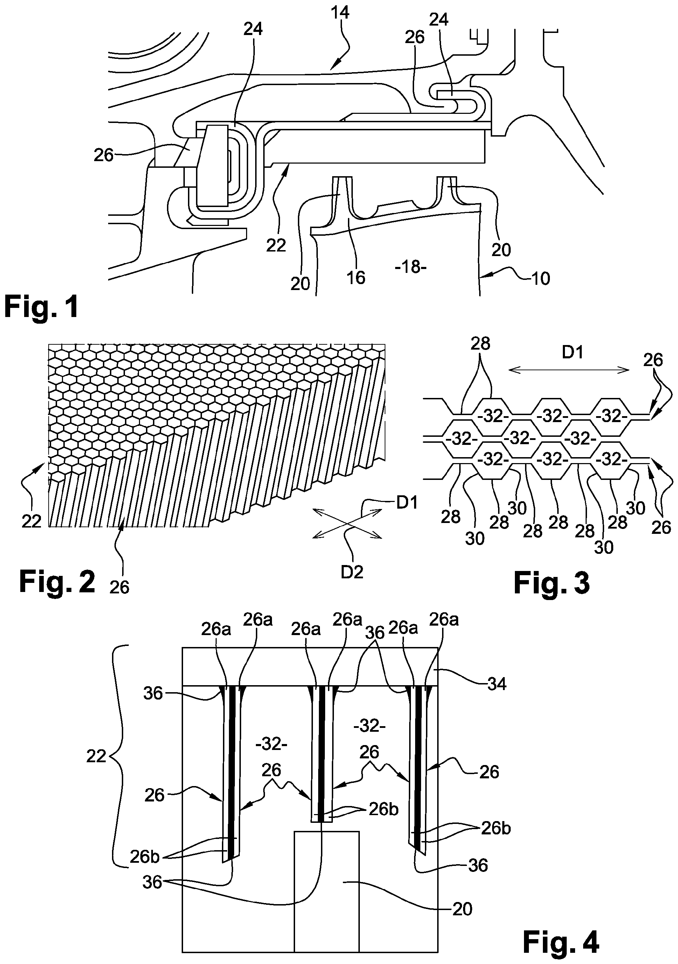

On se réfère tout d'abord à la figure 1 qui représente la zone d'extrémité radialement externe d'une aube mobile d'une turbine basse pression. Le rotor de la turbine basse pression comprend une pluralité de rangées annulaires d'aubes 10 agencées axialement en quinconce avec des rangées annulaires d'aubes fixes 12 portées extérieurement par un carter annulaire externe 14. Chaque aube mobile 10 comprend une plate-forme annulaire interne (non représentée) et une plate-forme annulaire externe 16 entre lesquelles s'étendent des pales 18. La plate-forme annulaire externe 16 porte sur sa surface annulaire radialement externe, opposée à la pale 18, une pluralité de léchettes 20 annulaires sensiblement radiales. Ces léchettes 20 coopèrent par frottement avec un panneau annulaire 22 de matériau abradable porté par le carter externe 14 pour assurer l'étanchéité en sommet d'aube mobile 10, c'est-à-dire limiter les circulations d'air parasites entre les sommets d'aubes mobiles 10 et le carter 14.

Le panneau 22 de matériau abradable comprend des organes 24 externes en C ouverts vers l'amont et chacun engagé circonférentiellement sur un rail 26 circonférentiel porté par le carter externe 14.

Un panneau abradable 22 tel que représenté en figure 2 est formé d'une pluralité de feuilles métalliques 26 à motif semi-hexagonal (figures 2 et 3). Les feuilles 26 ont été volontairement écartées les unes des autres sur la figure 3 de manière à mieux les distinguer les unes des autres.

De manière générale, chaque feuille 26 comprend des ondulations s'étendant dans une première direction D1 et formées d'une succession de zones dites de sommets 28 disposées en alternance avec des zones de jonction 30 desdites zones de sommets 28. Le panneau abradable 22 est constitué de plusieurs feuilles 26 juxtaposées les unes aux autres, les zones de sommets 28 étant mises en contact et les premières directions D1 des feuilles 26 étant parallèles deux à deux.

Dans la configuration représentée aux figures 2 et 3, les zones de sommets 28 et les zones de jonction 30 sont planes et sont agencées les unes relativement aux autres de manière à former un motif semi-hexagonal permettant, par mise en contact des zones de sommet 28 comme décrit précédemment, de constituer un bloc de matériau abradable 22 comportant des alvéoles hexagonales 32.

Comme cela est représenté sur la figure 4, une première des extrémités 26a des feuilles 26 est mise en contact avec une plaque 34 support. Un élément de brasure est agencé entre la plaque support 34 et les premières extrémités 26a des feuilles 26 de manière à réaliser une liaison entre ces éléments lors d'un passage dans un four ultérieur.

La figure 4 représente également la brasure 36 de liaison des feuilles 26 entre elles et des feuilles 26 à la plaque support 34. Il est clair que la brasure 36 s'étend entre les feuilles 26, plus particulièrement entre deux zones de sommet 28, depuis les premières extrémités 26a des feuilles 26 jusqu'à leurs secondes extrémités 26b opposées. En pratique, les premières extrémités 26a sont, dans le cas présent, des extrémités agencées, relativement à l'axe de la turbine, radialement à l'extérieur et les secondes extrémités 26b sont des extrémités agencées radialement à l'intérieur et sont destinées à venir frotter avec les léchettes 20 pour réaliser l'étanchéité. Comme expliqué précédemment, la présence de brasure 36 en contact avec les léchettes 20 est susceptible d'endommager les léchettes 20 et par conséquent de réduire l'étanchéité de l'ensemble.

L'invention propose ainsi d'ajouter un moyen de blocage de la diffusion de brasure jusqu'aux secondes extrémités 26b libres des feuilles 26 du panneau 22 abradable de manière à réduire la dureté moyenne de cette zone et ainsi éviter d'endommager les léchettes 20 des aubes 10 et rétablir une bonne étanchéité aux flux chauds en fonctionnement.

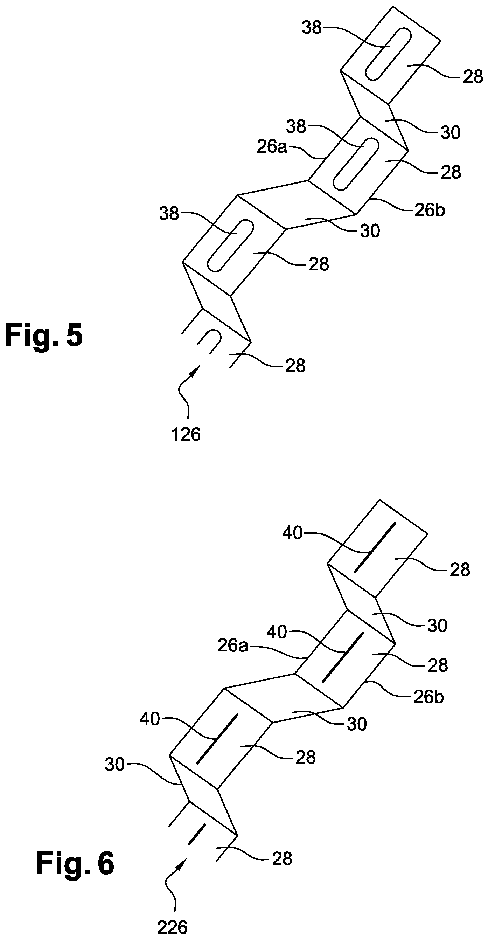

Dans une première réalisation représentée en figure 5, le procédé de fabrication du panneau abradable 22 à structure alvéolaire consiste à réaliser des ajours 38 dans les zones de sommet 28 des feuilles 26. L'ajour 38 ainsi réalisé permet de limiter la diffusion par capillarité de la brasure 36 liquide jusqu'aux secondes extrémités 26b des feuilles 126. Cet effet s'explique par l'absence de support physique à la diffusion de la brasure 36.

L'ajour 38 peut avoir une dimension de l'ordre de 0,5 millimètre, mesurée selon la seconde direction D2 perpendiculaire à la première direction D1 (voir figure 2). Comme représenté, les ajours 38 peuvent avoir une forme sensiblement rectiligne selon la première direction D1, avec des extrémités incurvées.

Dans une seconde réalisation d'une feuille 226 représentée en figure 6, les ajours 38 peuvent être remplacés par un produit anti-mouillant 40, dont la propriété est de limiter le flux de brasure de la première extrémité 26a vers la seconde extrémité 26b de la feuille 226. Un produit anti-mouillant peut être par exemple du nitrure de bore conditionné sous forme d'un aérosol pour pouvoir le pulvériser à l'endroit souhaité. Ces produits encore appelés produits « Stop-Off » sont commercialisés par la société Wesgo Metals sous le nom Stopyt® ou la société Wall Colmonoy Limited sous le nom Nicrobraz®. Un masque pourvu d'une ouverture peut être appliqué sur une feuille 226 pour réaliser l'application du produit anti-mouillant.

Dans l'une ou l'autre des réalisations précédemment décrites, on comprend que la formation d'un ajour 38 ou l'application d'un produit anti-mouillant limitant la diffusion/propagation de la brasure 36 peut être réalisée une feuille 126 sur deux. Selon une autre possibilité, il serait encore possible d'ajouter le moyen de blocage de la diffusion de la brasure 38, 40 uniquement sur une zone de sommet 38 sur deux dans la première direction D1 mais sur toutes les feuilles 126.

Dans encore une autre réalisation, il serait possible de réaliser des ajours 38 sur certaines des zones de sommet 28 et d'appliquer produit anti-mouillant 40 sur les zones de sommet 28 au niveau des extrémités des ajours 38, dans la première direction D1.

Pour réaliser la tenue mécanique initiale de l'ensemble formé des feuilles 126, 226 et de la plaque 34 de support, il est possible de réaliser des opérations de poinçonnage des feuilles 126, 226 entre elles et des feuilles 126, 226 avec la plaque support 34.

Egalement, l'ajout de la brasure peut s'effectuer de plusieurs façons. La première consiste simplement à insérer la brasure dans les alvéoles 32 sur la plaque support 34 et à passer l'ensemble au four. La deuxième connue sous le nom de brasage « tape », consiste à appliquer une bande de pâte de brasure sur les premières extrémités des feuilles et à presser celle-ci de manière à ce qu'elle pénètre dans les alvéoles 32. La plaque support 34 est appliquée dans un second temps.

Bien que l'invention a été décrite en référence à une plate-forme annulaire externe d'une turbine basse pression, on comprend que l'invention s'applique à d'autres parties de la turbomachine qui impose une coopération à étanchéité par frottements entre un abradable fixe et une partie mobile. Ainsi, par exemple, l'abradable décrit précédemment pourrait être utilisé sur une partie annulaire fixe agencée radialement en vis-à-vis de l'extrémité radialement interne d'aubes mobiles.

## Revendications

1. Procédé de fabrication d'une structure alvéolaire, en particulier du type structure abradable pour turbomachine, comprenant les étapes suivantes :
a) fournir une pluralité de feuilles métalliques (126, 226) présentant chacune, dans une première direction (D1), des ondulations chacune formée d'une succession de zones dites de sommet (28) disposées en alternance avec des zones de jonction (30) desdites zones de sommets (28) ;
b) juxtaposer les feuilles (126, 226) de manière à ce que lesdites premières directions (D1) desdites feuilles soient parallèles deux à deux, les zones de sommet (28) d'une feuille (126, 226) étant mise en contact avec les zones de sommets (126, 226) de la ou des feuilles (126, 226) adjacentes pour former des alvéoles (32) ;
c) mettre une première (26a) des extrémités de chaque feuille (126, 226), selon une seconde direction (D2) perpendiculaire à la première direction (D1), en contact avec une plaque support (34) ;
d) agencer un élément de brasure (36) entre la plaque support (34) et lesdites premières extrémités (26a) des feuilles (126, 226) et chauffer l'ensemble dans un four ;
le procédé comprenant une étape préalable à l'étape d) consistant à ajouter un moyen de blocage de la diffusion de brasure depuis lesdites premières extrémités (26a) des feuilles (126, 226) jusqu'aux secondes extrémités libres (26b) des feuilles (126, 226), **caractérisé en ce que** les moyens de blocage de la diffusion de la brasure comprennent des ajours (38) réalisés dans au moins certaines des zones de sommet (28) des feuilles (126, 226) métalliques.

2. Procédé selon la revendication 1, **caractérisé en ce que** les moyens de blocage de la diffusion de la brasure comprennent un produit anti-mouillant (40) appliqué sur au moins certaines des faces en contact des zones de sommet (28) des feuilles métalliques (126, 226).

3. Procédé selon la revendication 1 ou 2, **caractérisé en ce que** les ajours ont une dimension de l'ordre de 0,5 mm mesurée selon la seconde direction (D2).

4. Procédé selon l'une des revendications 1 à 3, **caractérisé en ce que** les ajours (38) ont une forme sensiblement rectiligne selon ladite première direction (D1).

5. Procédé selon l'une des revendications 1 à 4, **caractérisé en ce que** chaque feuille (126, 226) présente des ondulations formant un motif semi-hexagonal.

6. Procédé selon l'une des revendications 1 à 5, **caractérisé en ce que** chaque feuille (126, 226) présente une courbe directrice ondulée s'étendant selon ladite première direction (D1) donnée et une génératrice s'étendant selon la seconde direction D2.

## Patentansprüche

1. Verfahren zur Herstellung einer Wabenstruktur, insbesondere vom Typ mit abreibbarer Struktur für Turbomaschinen, umfassend die folgenden Schritte:
a) Bereitstellen einer Vielzahl von Metallblechen (126, 226), die jeweils in einer ersten Richtung (D1) Wellungen aufweisen, die jeweils durch eine Folge von sogenannten Scheitelzonen (28) gebildet werden, die abwechselnd mit Verbindungszonen (30) der Scheitelzonen (28) angeordnet sind;
b) Nebeneinanderlegen der Bleche (126, 226) derart, dass die ersten Richtungen (D1) der Bleche paarweise parallel verlaufen, wobei die Scheitelzonen (28) eines Blechs (126, 226) mit den Scheitelzonen (126, 226) des benachbarten Blechs bzw. der benachbarten Bleche (126, 226) in Kontakt gebracht werden, um Waben (32) zu bilden;
c) Inkontaktbringen eines ersten (26a) der Enden jedes Blechs (126, 226) mit einer Trägerplatte (34) in einer zur ersten Richtung (D1) senkrechten Richtung (D2);
d) Anordnen eines Lötelements (36) zwischen der Trägerplatte (34) und den ersten Enden (26a) der Bleche (126, 226) und Erhitzen des Ganzen in einem Ofen;
wobei das Verfahren einen Schritt vor dem Schritt d) umfasst, der darin besteht, ein Mittel zur Lot-Diffusionssperre von den ersten Enden (26a) der Bleche (126, 226) zu den zweiten freien Enden (26b) der Bleche (126, 226) hinzuzufügen,
**dadurch gekennzeichnet, dass** die Lot-Diffusionssperrmittel Öffnungen (38) umfassen, die in mindestens einigen der Scheitelzonen (28) der Metallbleche (126, 226) vorgesehen sind.

2. Verfahren nach Anspruch 1,
**dadurch gekennzeichnet, dass**
die Lot-Diffusionssperrmittel ein Anti-Benetzungsmittel (40) enthalten, das zumindest auf einige der Kontaktflächen der Scheitelzonen (28) der Metallbleche (126, 226) aufgetragen ist.

3. Verfahren nach Anspruch 1 oder 2,
**dadurch gekennzeichnet, dass**
die Öffnungen eine Abmessung in der Größenordnung von 0,5 mm, gemessen in der zweiten Richtung (D2), haben.

4. Verfahren nach einem der Ansprüche 1 bis 3,
**dadurch gekennzeichnet, dass**
die Öffnungen (38) in der ersten Richtung (D1) eine im Wesentlichen geradlinige Form haben.

5. Verfahren nach einem der Ansprüche 1 bis 4,
**dadurch gekennzeichnet, dass**
jedes Blech (126, 226) Wellungen aufweist, die ein halb-hexagonales Muster bilden.

6. Verfahren nach einem der Ansprüche 1 bis 5,
**dadurch gekennzeichnet, dass**
jedes Blech (126, 226) eine gewellte Leitkurve aufweist, die sich in der gegebenen ersten Richtung (D1) erstreckt, sowie eine Mantellinie, die sich in der zweiten Richtung (D2) erstreckt.

## Claims

1. A method for manufacturing a cellular structure, in particular of the abradable structure type for a turbomachine, comprising the following steps:
a) providing a plurality of metal sheets (126, 226) each having, in a first direction (D1), undulations each formed by a succession of so-called vertex areas (28) alternately arranged with junction areas (30) of said vertex areas (28);
b) juxtaposing the sheets (126, 226) so that said first directions (D1) of said sheets are parallel two by two, with the vertex areas (28) of a sheet (126, 226) being placed in contact with the vertex areas (126, 226) of the adjacent sheet(s) (126, 226) to form cells (32);
c) placing a first (26a) end of each sheet (126, 226), in a second direction (D2) perpendicular to the first direction (D1), in contact with a support plate (34);
d) arranging a soldering element (36) between the support plate (34) and said first ends (26a) of the sheets (126, 226) and heating the assembly in a furnace;
with the method comprising a step prior to step d) of adding means for blocking the diffusion of solder from said first ends (26a) of the sheets (126, 226) to the second free ends (26b) of the sheets (126, 226), **characterized in that** the solder diffusion blocking means comprises cutouts (38) provided in at least some of the vertex areas (28) of the metal sheets (126, 226).

2. A method according to claim 1, **characterized in that** the solder diffusion blocking means comprises a liquid repellent agent (40) applied to at least some of the contacting faces of the vertex areas (28) of the metal sheets (126, 226).

3. A method according to claim 1 or 2, **characterized in that** the cutouts have a dimension of about 0.5mm, as measured in the second direction (D2).

4. A method according to one of claims 1 to 3, **characterized in that** the cutouts (38) have a substantially rectilinear shape in said first direction (D1).

5. A method according to one of claims 1 to 4, **characterized in that** each sheet (126, 226) has undulations forming a semi-hexagonal pattern.

6. A method according to one of claims 1 to 5, **characterized in that** each sheet (126, 226) has a corrugated guide curve extending in said given first direction (D1) and a generator extending in the second direction (D2).
